(19) Europäisches Patentamt

European Patent Office

Office européen des brevets

(11) Veröffentlichungsnummer: **0 632 359 A2**

## (12) EUROPÄISCHE PATENTANMELDUNG

(21) Anmeldenummer: **94110200.6**

(22) Anmeldetag: **30.06.94**

(51) Int. Cl.⁶: **G06F 1/32**

(30) Priorität: **02.07.93 DE 9309641 U**
**23.09.93 DE 9314399 U**

(43) Veröffentlichungstag der Anmeldung:
**04.01.95 Patentblatt 95/01**

(84) Benannte Vertragsstaaten:
**AT CH DE DK ES FR GB IT LI PT SE**

(71) Anmelder: **Geiss, Andreas**
**Schopfheimerstrasse 4**
**D-79669 Zell im Wiesental (DE)**
Anmelder: **Räuber, Horst**

**Paradiesbuck 1**
**D-79429 Malsburg-Marzell (DE)**

(72) Erfinder: **Geiss, Andreas**
**Schofheimerstrasse 4**
**D-79669 Zell im Wiesenthal (DE)**

(74) Vertreter: **Allgeier, Kurt**
**Patentanwaltsbüro**
**Allgeier & Vetter**
**Postfach 14 27**
**D-79604 Rheinfelden (DE)**

(54) **Signalgesteuerte Schaltungsanordnung.**

(57) Signalgesteuerte Schaltungsanordnung zur Aufnahme und Verarbeitung von Signalfolgen zwischen einer computerseitigen Datensignalquelle und wenigstens einem peripherieseitigen Datensignaleingang, durch welche beim Auftreten von Signalfolge-Pausen mittels Aktivierung eines elektronisch wirksamen Eingriffs in die Netzstromzuführung zu einem Peripheriegerät die Stromaufnahme auf einen vorausbestimmbaren Bruchteil der Vollast-Stromaufnahme für die Dauer eines begrenzbaren Zeitabschnitts drosselbar ist, mit einer zwischen die computer- und peripherieseitigen Datensignaanschlüsse einsetzbare selbständigen Geräteinheit und mit einem mit dem oder den Signaleingängen verbundenem Signalauswertungsteil des von dem Computer übertragenen Signale und einem oder mehreren Schaltsignalausgängen zur Schaltsignal-Platine für den Netzstrom, und ferner mit einer Verbindung der Schaltsignal-Platine mit einem oder mehreren Netzausgängen und Kabel-Steckverbindungen zu dem oder den zu schaltenden Peripheriegeräten.

Fig. 3

EP 0 632 359 A2

Rank Xerox (UK) Business Services
(3.10/3.09/3.3.4)

Die Erfindung betrifft eine signalgesteuerte Schaltungsanordnung. Derartige Schaltanordnungen sind in verschiedenartigen Ausführungsformen für unterschiedliche Schaltfunktionen mit aufgabengemäss entsprechend konfigurierten Kombinationen von elektronischen oder auch nicht-elektronischen Bauelementen bekannt.

Bekannt ist es auch, entsprechend konfigurierte Kombinationen der genannten Bauelemente zur Lösung von Schaltaufgaben, vielfach der Ein- und Ausschalt-Funktion, in solche Geräte konstruktiv zu integrieren, deren Funktionsverhalten durch die signalgesteuerte Schaltung in der aufgabengemässen Weise beeinflussbar sein soll.

So sind beispielsweise Fernsehgeräte bekannt, die mit einer integrierten Abschaltvorrichtung auf Standby-Funktion versehen sind, welche nach einem wählbaren Zeitintervall abschaltet. Auch sind Computer, Monitore und Drucker bekannt, die ebenfalls mit einer integrierten Abschaltfunktion versehen sind. Diese reagiert auf kürzere oder längere Pausen der Impulsaufnahme z. B. bei kurz- oder längerzeitigen Arbeitsunterbrechungen, und schaltet dann die Geräte auf einen Bruchteil der Stromaufnahme herunter. Dabei kann das Herunterschalten in zwei Stufen erfolgen. Nähere Erläuterungen hierzu sind in der Zeitschrift CHIP, Heft 7 1993 aufgeführt.

Die aufgeführten Geräte haben jeweils für sich systemeigene Energiesparmechanismen, die sich bei Impulsaufnahme von selbst aktivieren.

Dadurch können im erheblichem Masse - wie Messungen über längere Zeiträume ergeben haben - Energieeinsparungen erzielt werden, die sich auch auf Klimaanlagen erstrecken können; derartige Nachmessungen über längere Zeiträume haben Ersparnisse der Leistungsaufnahme im Bereich von 90 Prozent ergeben.

Nachteilig an diesen Anordnungen ist der hohe Material- und Arbeitsaufwand, den der direkte Einbau von Energiesparmechanismen pro Gerät erfordert. Ausserdem erfordert diese Ausführung auch einen verhältnismässig hohen Schaltungsaufwand.

Entsprechend diesen Gegebenheiten ist es Aufgabe der Erfindung, ein Schaltungsanordnung zu schaffen, die vorhandenen Aggregaten ohne grosse Vorarbeiten zugeschaltet werden kann, die verringerten Schaltungsaufwand erfordert und die Energieaufnahme der zugeschalteten Aggregate auch stufenweise herbeiführt sowie bei Beendigung der Arbeitspause die alte Funktionsbereitschaft selbsttätig wiederherstellt. Die Schaltungsanordnung soll sich materialsparend auswirken.

Erfindungsgemäss wird ein Zusatzgerät vorgeschlagen, das vorhandenen Aggregaten über Kabelverbindung direkt zugeschaltet werden kann, ausgebildet als selbständige Geräteeinheit

a) mit einem oder mehreren mittels Kabel-Steckverbindung an den oder die Datensignalausgänge des Computers oder Peripheriegeräts anschliessbare Anordnung von einem oder mehreren Signaleingängen

b) mit einem mittels Kabel-Steckverbindung an das Computer-Netzteil oder eine Netzsteckdose anschliessbaren einem oder mehreren Netzeingängen,

c) mit einer mit dem Signaleingang verbundenen Signalauswertungsteil des von einem oder mehreren Datensignalausgängen des Computers übertragenen Signals und einem oder mehreren Schaltsignalausgängen zur Schaltsignal-Platine für den Netzstrom,

d) mit einer Verbindung der Schaltsignal-Platine mit einem oder mehreren Netzausgängen und Kabelsteckverbindung zu dem zu schaltenden Peripheriegerät,

e) mit einem oder mehreren als Steckverbindung ausgebildeten Signalausgängen zur Kabel-Steckverbindung zwischen der Geräteeinheit und dem Peripheriegerät.

Durch diese Geräteausbildung ist es möglich, die Vorteile der erheblichen Energieeinsparung für alle im Gebrauch befindlichen, vvorzugsweise auch älteren Geräte nutzbar zu machen. Besonders vorteilhaft erscheint die erfindungsgemässe Lösung dadurch, dass keinerlei Um- oder Einbauten oder Eingriffe in die zu schaltenden Geräte erforderlich sind. Lediglich ist es erforderlich, die Steckverbindungen herzustellen.

Nach weiteren Merkmalen der Erfindung kann das Peripheriegerät beispielsweise ein Monitor und/oder ein Drucker sein, und es kann die Geräteeinheit lösbar mit dem Computer und/oder mit dem Peripheriegerät verbindbar sein, beispielsweise durch Ankleben oder durch eine Halterungsvorrichtung.

Nach einem weiteren Merkmal ist eine Abschirmung des Datensignals innerhalb der Geräteeinheit vorteilhaft, um eine grösstmögliche Datenreinheit zu erzielen. Ebenfalls vorteilhaft ist es nach einem weiteren Vorschlag, in der Geräteeinheit einen Pufferspeicher zur Aufnahme und Speicherung der vom Computer zur Weiterleitung an das Peripheriegerät abgesetzten Daten bis zum Beginn von dessen Betriebsbereitschaft vorzusehen.

Weiterhin ist es erfindungsgemäss vorteilhaft, wenn in die Geräteeinheit eine als Zeitverzögerungselement wirkende Platine in die Ausschaltsignalleitung eingesetzt ist. Dadurch kann in vorwählbarer Weise die Herunterschaltung des Energieaufnahmewertes vom Beginn der Unterbrechung der Arbeit an dem Computer durch die arbeitende Person verzögert werden, um bei Kurzzeit-Unterbrechungen die Anzahl der Schaltvorgänge zu verringern. Die Verzögerung der Herunterschaltung dürfte im allgemeinen ca. 1 bis 1,5 Minuten gewählt werden.

Nach einer anderen Ausgestaltung der Schaltungsanordnung ist ein Computer über eine gemeinsame Geräteeinheit mit mehreren selbständigen Peripheriegeräten lösbar verbindbar.

In umgekehrter Weise kann ein Peripheriegerät über eine gemeinsame Geräteeinheit mit mehreren selbständigen Computern lösbar verbindbar angeordnet sein.

Auch können nach einer weiteren Variante mehrere selbständige Computer über eine gemeinsame Geräteeinheit mit mehreren selbständigen Peripheriegeräten lösbar verbindbar sein.

Der gemeinsame Vorteil der drei letztgenannten Schaltungsanordnungen besteht darin, dass auch ein oder mehrere voneinander unabhängige Computer über eine einzige gemeinsame Geräteeinheit mit einem oder mehreren gleichermassen selbständigen Periheriegeräten verbunden sein können, wobei alle Geräte voneinander unabhängig über die Geräteeinheit bedienbar sind. Neben verringertem Schaltungsaufwand wird auf diese Weise der Einbau von Energiesparmechanismen in jedes Gerät vermieden.

Nach einer anderen Ausgestaltung kann die Geräteeinheit am Netzeingang über ein Netzkabel mit Netzstecker an das Stromnetz anschliessbar sein. Auf diese Weise ist im Bedarfsfalle eine direkte Stromeinspeisung vom Netz möglich.

Weiterhin kann die Geräteeinheit einen zusätzlichen Datenausgang zur Rückmeldung des jeweils geschalteten Zustandes aufweisen. Auch kann ausserhalb der Geräteeinheit eine Signaleinrichtung zur Anzeige des jeweiligen Betriebszustandes zugeschaltet sein. Beide Massnahmen dienen zur Sicherstellung des geplanten Arbeitsablaufes.

Weitere Merkmale und Besonderheiten der Erfindung sind den in der Zeichnung dargestellten Ausführungsbeispielen zu entnehmen, die im folgenden näher erläutert sind. Es zeigen

Fig. 1 eine schematische Darstellung des erfindungsgemässen Geräts mit skizzenhafter Hervorhebung der wesentlichen Bauelemente,

Fig. 2 eine Seitenansicht eines Computers mit einem über die Geräteeinheit mit diesem verbundenen Monitor,

Fig. 3 eine Draufsicht auf eine Anlage mit einem Computer und einem mittels einer ersten Geräteeinheit gesteuerten Monitor und einem mittels einer zweiten Geräteeinheit gesteuerten Drucker,

Fig. 4 eine schaltungsmässige Verbindung eines Computers mit einem Perpheriegerät über die Geräteeinheit,

Fig. 5 eine Schaltungsanordnung, wonach ein Computer über eine Geräteeinheit mit zwei Perpheriegeräten verbunden ist,

Fig. 6 eine Draufsicht auf eine Anlage mit zwei Computern, die über eine Geräteeinheit mit einem Peripheriegerät verbunden sind,

Fig. 7 eine Draufsicht auf eine Anlage mit zwei Computern, die über eine Geräteeinheit mit drei Peripheriegeräten verbunden sind.

Fig. 8 eine Geräteeinheit mit einer Anordnung zur Stromdrosselung und einer Anordnung zur Signalauswertung,

Fig. 9 eine Geräteeinheit mit einer Anordnung zur Stromdrosselung, einer Anordnung zur Signalauswertung und Anordnung zur Versorgung der Elektronik,

Fig. 10 eine Geräteeinheit mit einer Geräteeinheit nach Fig. 8 in Verbindung mit einer als BUS-Steckkarte ausgebildeten Anordnung zur Signalauswertung,

Fig. 11 eine Geräteeinheit mit einer Anordnung zur Stromdrosselung und einer Anordnung zur Signalauswertung in einer anderen Ausführung,

Fig. 12 eine Geräteeinheit mit Anordnungen zur Stromdrosselung, zur Signalauswertung und Modulen als Sende- und Empfangseinheiten,

Fig. 13 eine Geräteeinheit mit jeweils zwei Anordnungen zur Stromdrosselung und zur Signalauswertung,

Fig. 14 eine Geräteeinheit mit Anordnungen zur Stromdrosselung, Signalauswertung und zur Zeitsteuerung,

Fig. 15 eine Geräteeinheit mit Anordnungen zur Stromdrosselung und zur Zeitsteuerung,

Fig. 16 eine Geräteeinheit mit zwei Anordnungen zur Stromdrosselung und einer aus BUS-Steckkarte ausgebildeten Anordnung zu Zeitsteuerung.

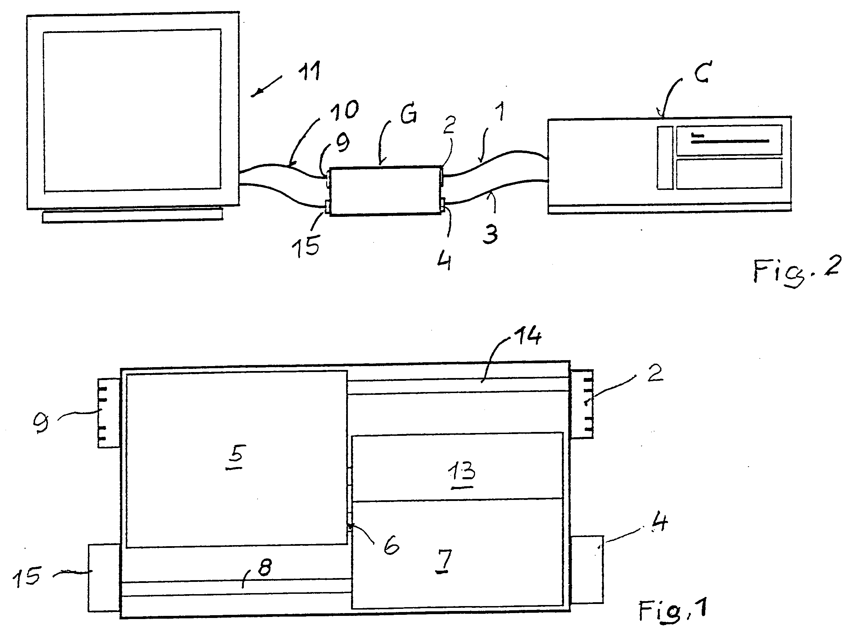

Die Geräteeinheit G gemäss Fig. 1 ist mit einem Eingang 2 für das Datensignal vom Computer C und einem Netzeingang 4 versehen; dieser steht mit dem Netzteil 13 zur Stromversorgung der Elektronik in Verbindung. Mittels des Datensignalkabels 14 ist der Eingang 2 mit dem Signalauswertungsteil 5 verbunden. Das Schaltsignal wird über den Schaltsignalausgang 6 zur Schaltsignal-Platine 7 übertragen, die über

3

die Verbindung 8 an den Netzausgang 15 angeschlossen ist. Ausserdem ist ein Signalausgang 9 vorgesehen, der als VGA- oder TTL, Centronics-Buchse oder anderweitig ausgebildet sein kann. Zur Abschirmung der Datensignale in der Geräteeinheit G ist diese mit Aluminium ausgekleidet.

Aus Fig. 2 sind die Kabelanschlüsse der Geräteeinheit G mit dem Computer C und dem als Monitor 11 dargestellten Peripheriegerät ersichtlich. Zwischen der Geräteeinheit G und dem Computer C ist die Kabel-Steckverbindung 1 für die Signalübertragung und die Kabel-Steckverbindung 3 für die Übertragung der Spannung vorgesehen; diese sind jeweils an den Signaleingang 2 und den Netzeingang 4 angeschlossen. Der Computer C ist als Personalcomputer dargestellt; es kann jedoch jedes beliebige andere Computergerät benutzt werden.

Die Geräteeinheit G kann auch mehrere Signalein- und -Ausgänge zu mehreren Signalein- und -ausgängen der angeschlossenen Aggregate aufweisen. Über einen zusätzlichen, nicht dargestellten Datenausgang mit Steckverbindung zum Computer C zurück kann eine Rückmeldung des momentanen Schaltzustandes erfolgen. Auch kann über eine nicht dargestellte Signaleinrichtung ausserhalb der Geräteeinheit G der jeweilige Betriebszustand des Systems ablesbar sein. Bei Durchführung beider Massnahmen sichert können auftretende Störungen im Schaltsystem sofort festgestellt und behoben werden.

Die Steckverbindung zwischen den Aggregaten kann verschiedene Formen aufweisen, deren Auswahl sich nach der Form der Signalein- und -ausgänge richtet und umgekehrt. Auch kann die Geräteeinheit G unterschiedlichen Netzspannungen angepasst werden.

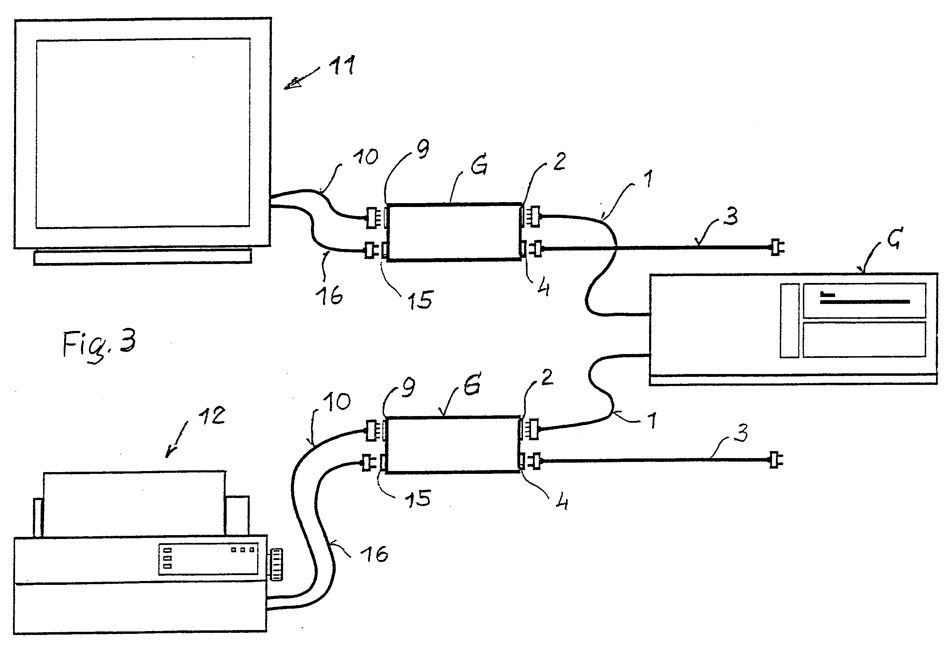

Die Darstellung gemäss Fig. 3 zeigt eine vollständig installierte Anlage mit einem Personalcomputer C, einem Monitor 11 und einem Drucker 12. Demzufolge sind die Kabel-Steckverbindungen 1, 10 für das Datensignal 3 und 16 für die Netzspannung zu den beiden Geräteeinheiten G jeweils zweimal vorhanden. Dabei kann jede Geräteeinheit G mit einer besonders gewählten Verzögerungsdauer für die Abschaltung programmiert sein. Die Ein- und Ausgänge an der Geräteeinheit G sind wie in Fig. 2 bezeichnet.

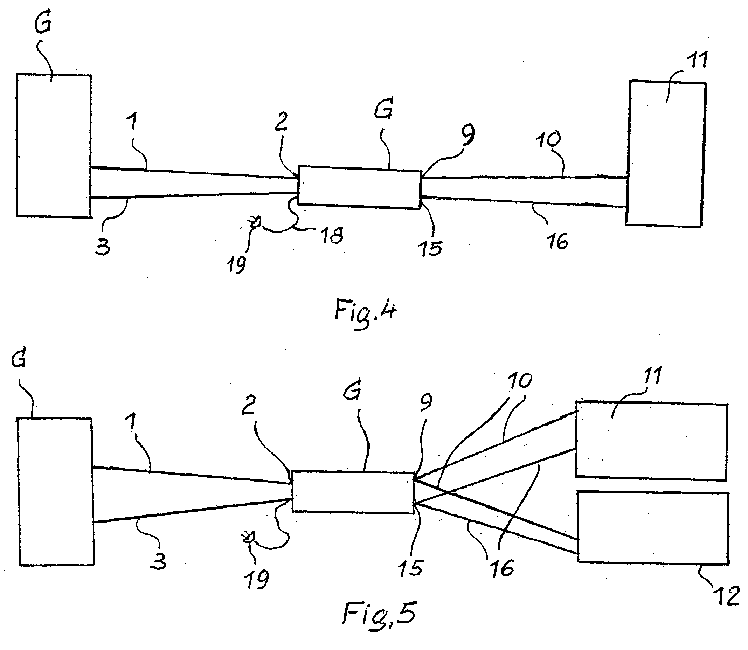

In Fig. 4 ist die Schaltungsverbindung eines Computers C mit dem Peripheriegerät 11 mittels der Geräteeinheit G dargestellt, vergleichbar mit Fig. 1. Im Unterschied zu Fig. 1 weist die Geräteeinheit G an ihrem Netzeingang 4 ein Netzkabel 18 mit Netzstecker 19 auf und kann auf diese Weise auch direkt an das Stromnetz angeschlossen werden.

Die lösbare Schaltungsverbindung nach Fig. 5 zeigt einen Computer C, der mit zwei Peripheriegeräten 11 und 12 über eine gemeinsame Geräteeinheit G lösbar verbunden ist. Der Signalausgang 9 der Geräteeinheit G weist jeweils eine Kabel-Steckverbindung 10 zu den Peripheriegeräten 11 und 12 auf; der Netzausgang 15 weist in gleicher Anordnung jeweils eine Kabelsteckverbindung 16 zu den Peripheriegeräten 11 und 12 auf.

Ein möglicher Netzanschluss der Geräteeinheit G ist in gleicher Weise wie in Fig. 4 vorgesehen.

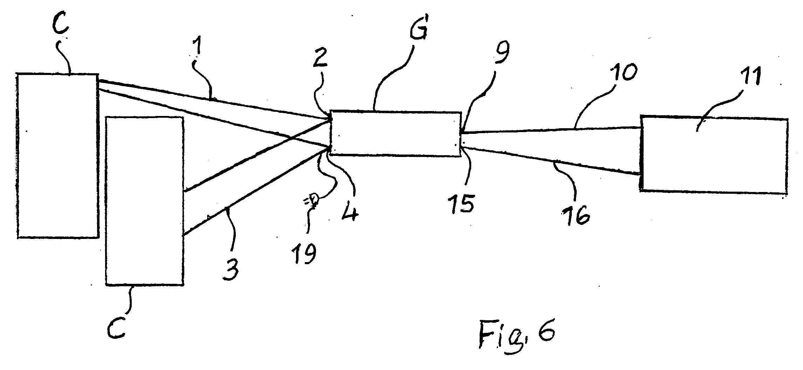

In Fig. 6 ist eine Anordnung derart gewählt, dass zwei selbständige Computer C über eine Geräteeinheit G mit dem Peripheriegerät 11 verbunden sind. Ein Computer ist mittels Netzkabel 18 an die Geräteeinheit G angeschlossen, die übrigen Anschlüsse werden mittels Kabelsteckverbindungen hergestellt, wie bereits beschrieben.

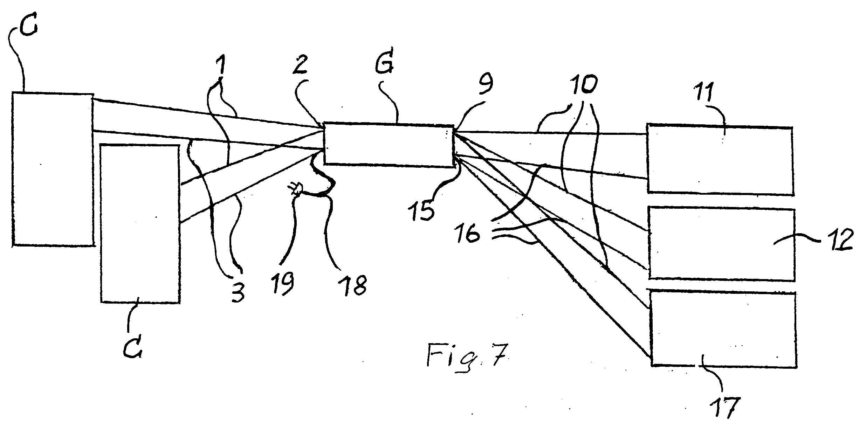

Fig. 7 weist zwei selbständige Computer C und drei selbständig arbeitende Peripheriegeräte 11, 12, 17 auf, die über eine gemeinsame Geräteinheit G miteinander lösbar verbunden sind entsprechend dem aufgezeigten Verbindungssystem.

Die in den Fig. 4, 5 und 6 dargestellten Anordnungen haben den Vorteil, dass in beliebig wählbarer Anzahl ein oder mehrere selbständige Computer C und/oder ein oder mehrere gleichermassen selbständige Peripheriegeräte einer einzigen gemeinsamen Geräteeinheit G zugeordnet und getrennt gesteuert werden können.

Da die Geräteeinheit G kann statt einer Kabelsteckverbindung auch über ein herkömmliches Netzkabel 18 mit Netzstecker 19 mit den Computern C und /oder Peripheriegeräten lösbar verbindbar sein kann, wird der Einsatzbereich der Geräteeinheit beachtlich erweitert.

Vorteilhafterweise sind alle über die Geräteeinheit G miteinander verbundenen oder an sie angeschlossenen Aggregate in ihrer Netzstromaufnahme auch unabhängig voneinander stufenweise herunterschaltbar. Die Peripheriegeräte (Monitor) 11 und 17, die den höchsten Stromverbrauch aufweisen, können dabei den Wert Null erreichen, das Peripheriegerät (Drucker) 12 behält auf seiner untersten Stufe einen Energieverbrauch von ca. 4 W bei.

Auch der Computer C hat in seiner untersten Stufe noch einen Energieverbrauch von ca. 5 W. Die stufenweise Drosselung der Energiezufuhr verkürzt die "Wiederanheizzeit", d. h. die Wiederherstellung der Betriebsbereitschaft der Aggregate und erhöht damit zugleich ihre Lebensdauer. Zum Herunterschalten der Netzstromaufnahme werden vorwiegend Spannungs- oder Stromteiler eingesetzt.

Das Herunterschalten sowie das Ein- und Ausschalten der an die Geräteeinheit G angeschlossenen Aggregate kann je nach den vorhandenen Bedingungen und Wünschen zeitversetzt erfolgen.

4

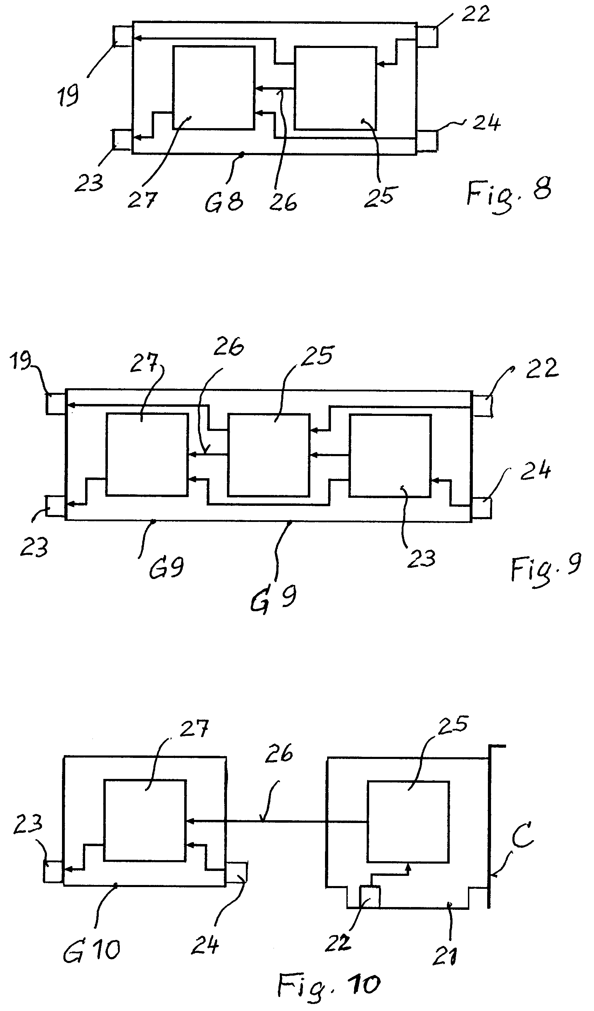

Weitere vorteilhafte Ausbildungsweisen ein-oder mehrteiliger Geräteeinheiten mit als Module ausgebildeten Anordnungen zur Stromdrosselung und zur Signalauswertung sowie als Sende-und Empfangseinheiten oder als Netzteil sind aus den Darstellungen der Fig. 8 bis 13 zu entnehmen.

Dort sind die Geräteeinheiten in Modulbauweise mit jeweiligen kompatiblen und daher austauschbaren Modulen für die einzelnen jeweils gewünschten Funktionen ausgerüstet. Die in Fig. 8 dargestellte Geräteeinheit G 8 ist mit einer modularen Anordnung zur Stromdrosselung 27 und zur Signalauswertung 25 versehen, und mit 22 ist der Signaleingang und mit 19 der Signalausgang bezeichnet, während der Stromeingang mit 24 und der Stromausgang mit 23 bezeichnet ist. Die nicht näher dargestellten und bezeichneten Kabelsteckverbindungen sind in den Fig. 1 bis 7 dargestellt.

Eine Geräteeinheit G 9 mit drei Modulen ist aus Fig. 9 ersichtlich. Diese enthalten die Anordnungen zur Stromdrosselung 27, zur Signalauswertung 25 und ein Netzteil zur Stromversorgung 23 sowie die erforderlichen Strom-Aus- und -Eingänge 23, 24 und die Signal-Aus- und -Eingänge 19, 22.

Die Geräteeinheit G 10 - siehe Fig. 10 - mit nur einer modularen Anordnung zur Stromdrosselung 27 ist mit einer BUS-Steckkarte 21 verbindbar, die eine Anordnung 25 zur Signalauswertung und den Signaleingang 22 enthält und in den mit C angedeuteten Computer einsetzbar ist.

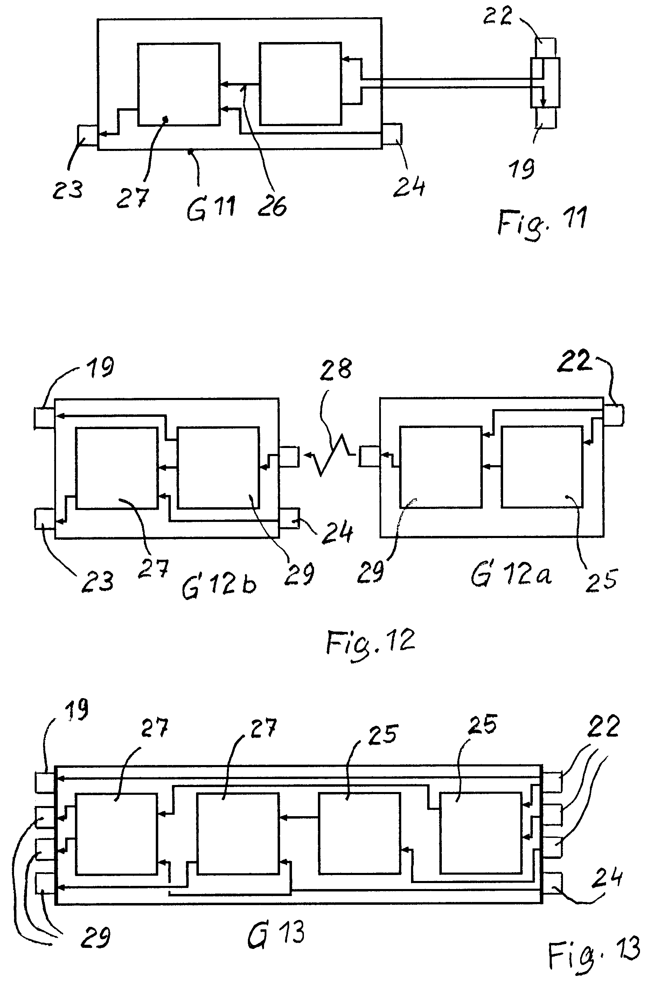

In weiterer Abwandlung kann die Ausbildung nach Fig. 11 bei der Geräteeinheit G 11 auch derart getroffen sein, dass an dieser die Strom-Aus- und -Eingänge 23 und 24 angeordnet sind, während die Signal-Aus- und -Eingänge 19 und 21 separat mittels eines Kabels 30 und bekannter Steckverbindungen mit einer Steckereinheit 31 an einen nicht dargestellten Computer angeschlossen sind.

Bei einer anderen Ausbildungsweise nach Fig. 12 sind diese Anordnungen in zwei Geräteeinheiten G 12a und G 12b untergebracht, und zwar enthält die Geräteeinheit G 12a die Anordnung zur Signalauswertung 25 und der Sende- und Empfangseinheit 29; sie kann mit der Geräteeinheit G 12b mittels Verdrahtung oder vorzusgweise wie im dargestellten Beispiel mittels Infrarot- oder Funkübertragung 28 verbunden sein. In der Geräteeinheit G 12b sind hier die Anordnungen der Sende- und Empfangseinheit 29 und zur Stromdrosselung 27 enthalten. Die Strom- und Signal-Ein- und -Ausgänge sind wie bei den anderen Figuren bezeichnet.

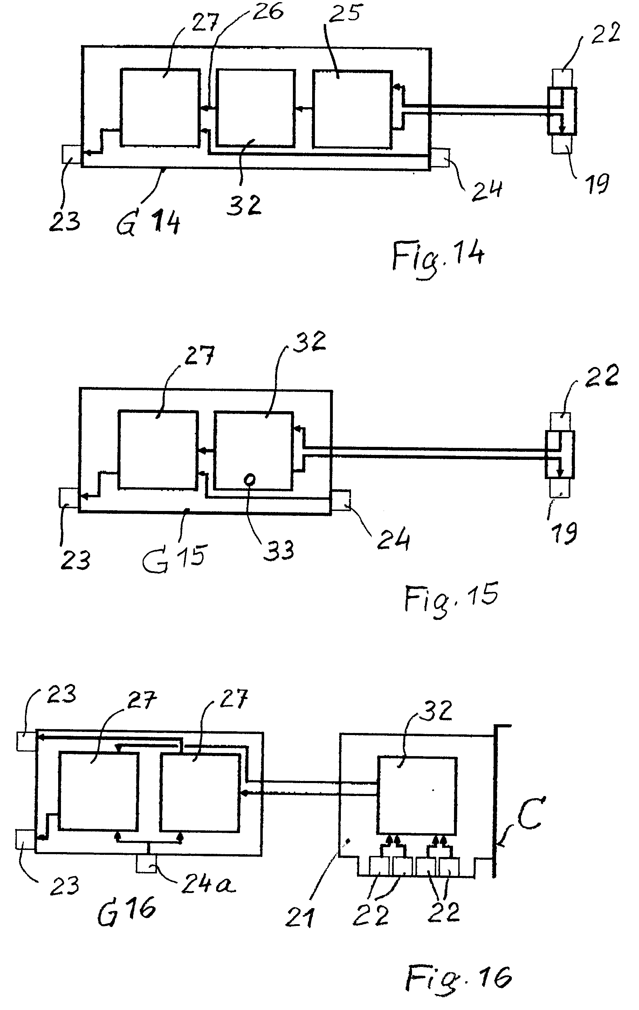

Die Fig. 13 zeigt die Geräteeinheit G 13, welche jeweils zwei Anordnungen zur Stromdrosselung 27 und zur Signalauswertung 25 sowie die zugehörigen doppelt vorhandenen Strom- und Signal-Ein- und -Ausgänge 22, 24 und 19, 23 aufweist.

Weitere Ausgestaltungen sind aus den Fig. 14 bis 16 zu entnehmen, bei denen die Geräteeinheiten G 14 bis G 16 zusätzlich mit Zeitsteuergliedern 32 ausgerüstet sind; diese sind mit einer Einstellvorrichtung 33 versehen, um die gewünschte Zeitverzögerung beim Ausschalten oder stufenweisen Herunterschalten wählen zu können.

Im Beispiel nach Fig. 14 ist eine Kombination von Anordnungen zur Stromdrosselung 27, zur Signalauswertung 25 und zur Zeitsteuerung 32 in einer Geräteeinheit G 14 dargestellt. Die Ausführung nach Fig. 15 zeigt eine nur zweigliedrige Geräteeinheit G 15 mit je einer Anordnung zur Stromdrosselung 27 und zur Zeitsteuerung 32 ebenfalls mit einer Einstellvorrichtung 33. Schliesslich zeigt die Fig. 16 eine Ausführung einer Geräteeinheit G 16 für zwei selbständige Computer-Basisinstallationen mit zwei parallelen Anordnungen zur Stromdrosselung 27 und getrennt hiervon auf einer BUS-Steckkarte 21 zwei paarweisen Signaleingängen 22 und einer Anordnung zur Zeitsteuerung 32. Die Geräteeinheit G 16 ist zur Stromversorgung mit einem (zentralen) Stromeingang 24a für beide Systeme und zwei getrennten Stromausgängen 23 versehen.

Wie die Fig. 8 bis 16 zeigen zahlreiche Kombinationsmöglichkeiten der modularen Funktionselemente und dadurch verschiedenartig ausgelegte Geräteeinheiten. Diese Vielgestaltigkeit erlaubt es, die erfindungsgemässe Schaltungsanordnung an alle gängigen Computeranlagen anpassbar zu konfigurieren.

EP 0 632 359 A2

| AKTE - CASE | STICHWORT - key-word | 
|---|---|
| 5433 EP | Schaltungsanordnung |

BEZUGS-ZEICHEN-LISTE    Bl.1
ANMELDER
Andreas Geiss und H. Räuber

| POS. | BENENNUNG / DESIGNATION | POS. | BENENNUNG / DESIGNATION |
|---|---|---|---|
| 1 | Kabel-Steckverbindung | 58 | |
| 2 | Signaleingänge | 59 | |
| 3 | Kabel-Steckverbindung | 60 | |
| 4 | Netzeingänge | 61 | |
| 5 | Signalauswertungsteil | 62 | |
| 6 | Schaltsignalausgänge | 63 | |
| 7 | Schaltsignal-Platine | 64 | |
| 8 | Verbindung | 65 | |
| 9 | Signalausgänge | 66 | |
| 10 | Kabel-Steckverbindung | 67 | |
| 11 | Peripheriegerät | 68 | |
| 12 | Peripheriegerät | 69 | |
| 13 | Netzteil | 70 | |
| 14 | Grafiksignalkabel | 71 | |
| 15 | Netzausgänge | 72 | |
| 16 | Kabel-Steckverbindung | 73 | |
| 17 | Peripheriegerät | 74 | |
| 18 | Netzkabel | 75 | |
| 19 | Signalausgang | 76 | |
| 20 | | 77 | |
| 21 | BUS-Steckkarte | 78 | |
| 22 | Signaleingang | 79 | |
| 23 | Stromeingang | 80 | |
| 24 | Stromausgang | 81 | |
| 24a | Stromeingang | 82 | |
| 25 | Signalauswertung | 83 | |
| 26 | | 84 | |
| 27 | Stromdrosselung | 85 | |
| 28 | Infrarot- u. Funkübertr. | 86 | |
| 29 | Sende- u. Empfangseinheit | 87 | |
| 30 | Kabel | 88 | |
| 31 | Steckereinheit | 89 | |
| 32 | Zeitsteuerglieder | 90 | |
| 33 | Einstellvorrichtung | 91 | |
| 34 | | 92 | |
| 35 | | 93 | |
| 36 | | 94 | |
| 37 | | | |
| 38 | | | |
| 39 | | | |
| 40 | | C | Computer |
| 41 | | G | Geräteeinheit |
| 42 | | G 9 | Geräteeinheit |
| 43 | | G 10 | Geräteeinheit |
| 44 | | G 11 | Geräteeinheit |
| 45 | | G 12a | Geräteeinheit |
| 46 | | G 12b | Geräteeinheit |
| 47 | | G 13 | Geräteeinheit |
| 48 | | G 14 | Geräteeinheit |
| 49 | | G 15 | Geräteeinheit |
| 50 | | G 16 | Geräteeinheit |
| 51 | | | |
| 52 | | | |
| 53 | | | |
| 54 | | | |
| 55 | | | |
| 56 | | | |
| 57 | | | |

**Patentansprüche**

1. Signalgesteuerte Schaltungsanordnung zur Aufnahme und Verarbeitung von Signalfolgen zwischen einer computerseitigen Datensignalquelle und wenigstens einem peripherieseitigen Datensignaleingang, durch welche beim Auftreten von Signalfolge-Pausen mittels Aktivierung eines elektronisch wirksamen

6

Eingriffs in die Netzstromzuführung zu einem Peripheriegerät die Stromaufnahme auf einen vorausbestimmbaren Bruchteil der Vollast-Stromaufnahme für die Dauer eines begrenzbaren Zeitabschnitts drosselbar ist,
gekennzeichnet
durch eine zwischen die computer- und peripherieseitigen Datensignalanschlüsse einsetzbare selbständige Geräteinheit (G),

a) mit einem oder mehreren mittels Kabel-Steckverbindung (1) an den oder die Datensignalausgänge des Computers (C) anschliessbare Anordnung von einem oder mehreren Signaleingängen (2),

b) mit einem oder mehreren mittels Kabel-Steckverbindung (3) an das Computer-Netzteil oder eine Netzsteckdose anschliessbaren einem oder mehreren Netzeingängen (4),

c) mit einem mit dem oder den Signaleingängen (2) verbundenem Signalauswertungsteil (5) des von dem Computer (C) übertragenen Signalen und einem oder mehreren Schaltsignalausgängen (6) zur Schaltsignal-Platine (7) für den Netzstrom,

d) mit einer Verbindung (8) der Schaltsignal-Platine (7) mit einem oder mehreren Netzausgängen (15) und Kabel-Steckverbindung (16) zu dem oder den zu schaltenden Peripheriegeräten (11, 12, 17),

e) mit einem oder mehreren als Steckverbindung ausgebildeten Signalausgängen (9) zur Kabel-Steckverbindung (10) zwischen der Geräteinheit (G) und dem oder den Peripheriegeräten (11, 12, 17).

2. Schaltungsanordnung nach Anspruch 1, dadurch gekennzeichnet, dass das Peripheriegerät ein Monitor (11, 17) und/oder ein Drucker oder ein anderes Peripheriegerät (12) ist.

3. Schaltungsanordnung nach Anspruch 1, dadurch gekennzeichnet, dass die Geräteinheit (G) lösbar mit dem Computer (C) und/oder dem Peripheriegerät (11, 12, 17) verbindbar ist.

4. Schaltungsanordnung nach Anspruch 1, gekennzeichnet durch eine Abschirmung des Datensignals in der Geräteinheit (G).

5. Schaltungsanordnung nach Anspruch 1, gekennzeichnet durch einen Pufferspeicher zur Aufnahme der vom Computer zur Weiterleitung an das Peripheriegerät (11, 12, 17) abgesetzten Daten bis zu dessen Betriebsbereitschaft.

6. Schaltungsanordnung nach Anspruch 1, gekennzeichnet durch eine als Zeitverzögerungselement wirkende, in die Ausschaltsignalleitung eingesetzte Platine.

7. Schaltungsanordnung nach Anspruch 1, gekennzeichnet durch einen Computer (C), der über eine gemeinsame Geräteinheit (G) zu mehreren selbständigen Peripheriegeräten (11,12. 17) lösbar verbindbar ist.

8. Schaltungsanordnung nach Anspruch 1, gekennzeichnet durch ein Peripheriegerät (11), (12) oder (17), dass über eine gemeinsame Geräteinheit (G) mit mehreren selbständigen Computern (C) lösbar verbindbar ist.

9. Schaltungsanordnung nach Anspruch 1, gekennzeichnet durch mehrere selbständige Computer (C), die über eine gemeinsame Geräteinheit (G) mit mehreren selbständigen Peripheriegeräten (11, 12, 17,) lösbar verbindbar sind.

10. Schaltungsanordnung nach Anspruch 1, dadurch gekennzeichnet, dass die Geräteinheit (G) am Netzeingang (4) über ein Netzkabel (18) mit Netzstecker (19) an das Stromnetz anschliessbar ist.

11. Schaltungsanordnung nach Anspruch 1, gekennzeichnet dadurch, dass die Netzstromaufnahme der Geräteinheit (G) über Spannungsteiler, Stromteiler o. ä. Bauelemente stufenweise herunterschaltbar ist.

12. Schaltungsanordnung nach Anspruch 1, 7, 8, 9 und 11, dadurch gekennzeichnet, dass die angeschlossenen Peripheriegeräte unabhängig voneinander über die Geräteinheit (G) zeitversetzt und stufenweise herunterschaltbar und/oder zeitversetzt ein- und ausschaltbar sind.

**13.** Schaltungsanordnung nach Anspruch 1, dadurch gekennzeichnet, dass die Geräteeinheit (G) einen zusätzlichen Datenausgang zum Computer (C) zur Rückmeldung des jeweils geschalteten Zustandes aufweist.

**14.** Schaltungsanordnung nach Anspruch 1, dadurch gekennzeichnet, dass ausserhalb der Geräteeinheit (G) eine Signaleinrichtung zur Anzeige des jeweiligen Betriebszustandes zuschaltbar ist.

**15.** Schaltungsanordnung nach wenigstens einem der Ansprüche 1 bis 14, dadurch gekennzeichnet, dass die einzelnen Funktionseinheiten als in sich geschlossene Anordnungen von Bau-Elementen zu jeweiligen Modulen zusammengefasst sind, von denen zwei oder mehrere in Geräteeinheiten untergebracht sind.

**16.** Schaltungsanordnung nach Anspruch 15, dadurch gekennzeichnet, dass die Anordnungen zur Stromdrosselung (27), zur Signalauswertung (25), zur Zeitsteuerung (32) und die als Sende- und Empfangseinheiten ausgebildeten Anordnungen (29) sowie die Strom-Ein- und -Ausgänge (23, 24) wie auch die Signal-Aus- und -Eingänge (19, 22) durch die bekannten Standard-Bauelemente dargestellt und in den Modulen zusammengefasst sind.

**17.** Schaltungsanordnung nach Anspruch 15, dadurch gekennzeichnet, dass die Anordnungen zur Signalauswertung (25) oder zur Zeitsteuerung (32) oder der Sende- und Empfangseinheiten (29) auf eine BUS-Steckkarte (21) aufgebracht sind.

**18.** Schaltungsanordnung nach einem der Ansprüche 15 oder 16, dadurch gekennzeichnet, die Module als in sich geschlossene Bau-Einheiten ausgebildet und in den Geräteeinheiten (G) austauschbar und ergänzbar sind.

Fig. 2

Fig. 1

EP 0 632 359 A2

Fig. 3

EP 0 632 359 A2

Fig.4

Fig.5

Fig. 6

Fig 7

EP 0 632 359 A2

Fig. 8

Fig. 9

Fig. 10

Fig. 11

Fig. 12

Fig. 13

Fig.14

Fig.15

Fig.16